# EUROPEAN PATENT SPECIFICATION

(11) **EP 0 458 124 B1**
(45) Date of publication and mention of the grant of the patent: **09.08.1995**
(21) Application number: 91107368.2
(22) Date of filing: 07.05.1991
(51) Int. Cl.: H02K 15/095, H02K 3/52

(54) **Method and apparatus for connecting intermediate stator coil leads**
Verfahren und Vorrichtung um Abzweigleitungen einer Ständerspule zu verbinden
Méthode et appareil pour connecter les lignes de dérivations d'une bobine statorique

(30) Priority: 25.05.1990 US 529183
(43) Date of publication of application: 27.11.1991
(73) Proprietor: AXIS S.p.A., I-50028 Tavarnelle Val di Pesa (Firenze) (IT)
(72) Inventor: Luciani, Sabatino, I-50019 Sesto Fiorentino (Firenze) (IT); Lumini, Antonio, I-50019 Sesto Fiorentino (Firenze) (IT); Ponzio, Massimo, I-50021 Barberino Val D'Elsa (Firenze) (IT)
(74) Representative: Lotti, Giorgio

(56) References cited:
- WO-A-90/04876
- DE-A- 3 918 129
- GB-A- 2 092 029
- US-A- 4 000 764
- US-A- 4 074 418
- PATENT ABSTRACTS OF JAPAN vol. 10, no. 272 (E-437)(2328) 16 September 1986, & JP-A-61 94529

## Description

### Background of the Invention

This invention relates to methods and apparatus for making stators for electric motors and similar machines such as generators. Although the invention is described herein in the context of its application to electric motor stators, it will be understood that it is equally applicable to other types of stators having intermediate lead wires extending from multiple coil portions wound on each stator pole.

Intermediate terminals extending from multiple coil portions wound on a stator pole are frequently required on electric motors for commutating motor speed and for other requirements. While in recent years machines have been developed to automatically wind stator coils and to connect the lead wires to terminal boards mounted on the stator core, for example, Pearsall U.S. patent 4,074,418, these machines cannot be used to automatically mount intermediate lead wires on the terminal board. Other methods and apparatus for automatically mounting the ends of stator windings to terminal boards are described in several patents, such as Fischer U.S. patent 4,428,113, Fischer U.S. patent 4,553,319, and Reiger, Jr., U.S. patent 4,000,764. While all of these devices have in common the capability to mount the ends of the stator coil windings to the terminal boards, none is capable of automatically mounting intermediate lead wires. Prior to the invention, intermediate lead wires were generated by interrupting the automatic operation of the winding machine and grasping a strand of wire between the coil portions mounted on a stator.

When the winding operation was complete, the strand of wire was manually secured to the terminal board.

PCT WO 90/04876 describes a stator having terminal boards at either end, wherein the field winding ends are mounted to one of the terminal boards, and an intermediate lead wire, is mounted to the terminal board at opposite ends of the stator.

JP 61-94529 describes a stator having a terminal board attached to one end that provides engagement slots for the field winding ends and an intermediate lead wire that is drawn as a continuous loop between multiple coils wound on the stator pole.

It is and object of this invention to provided methods and apparatus for automatically connecting the intermediate lead wires from multiple coil portions wound on a stator pole to terminal means mounted on the stator terminal board.

Another problem is that the previously known machines described in the above patents had to be designed and built for specific configurations of terminal means mounted on the terminal board. None of these relatively complex machines could be readily adjusted to handle a wide variation in the location of the terminal means mounted on the stator terminal board.

It is therefore another object of this invention to provide an apparatus for automatically connecting the intermediate lead wires from multiple coil portions wound on a stator pole to terminal means apparatus can be readily adjusted to account for variation in the placement of the terminal means on the terminal board.

Another problem with the existing method of generating intermediate lead wires is that after the winding is complete, the further manual step of cutting the intermediate lead wires and permanently affixing the wires to the terminal board is required. In addition to requiring manual effort, this latter step also involves some waste of wire.

In view of these considerations, it is still another object of this invention to provide methods and apparatus for permanently affixing the intermediate lead wires to the stator terminal board in a single operation, and with a minimum of wire waste.

### Summary of the Invention

These objects of the invention are accomplished in accordance with the principles of the invention by automatically connecting the intermediate lead wires extending between multiple coil portions wound on a pole of a stator core to terminal means located on the stator terminal board in a single operation requiring no further manual effort and which conserves wire relative to existing methods. As will be apparent from the following description, the apparatus of the invention is located at the winding machine according to claim 1.

The present invention is described with reference to terminal means having a hollow housing with a slot extending transversely through and axially down opposite walls of the housing, the walls defining a slot which is relatively wide at the top and tapered to a narrow base, so that a wire inserted transverse to the slots is frictionally engaged. Such terminal connection means are widely known in the field as AMP style terminals. The terminals are mounted on an electrically nonconducting terminal board which is mounted on an end face of the stator core.

Once a predetermined number of turns of coil wire have been wound on a stator pole by a coil winding shuttle, the apparatus of this invention yieldably grasps the strand of wire extending between the coil and the winding shuttle and positions the wire within a slot in the terminal means located on the stator terminal board. The apparatus retains the strand in engagement with the terminal means so that when the winding shuttle resumes operation the strand of wire is wrapped tightly against the exterior of the terminal means. The apparatus includes wire grasping and positioning means which cooperate with the coil winding shuttle and which are movable along three axes relative to the stator terminal board, so that the intermediate lead wires may be connected to terminal means located in any position and with any orientation relative to the stator core that is desirable for the specific stator application.

This invention includes method steps, according to claim 12, performed in sequence for generating the intermediate lead wires and for connecting the wires to the terminal means. In accordance with the principles of this invention, no cutting of the intermediate lead wire is involved in connecting the intermediate lead wire to the terminal means.

The nature of the invention will be more apparent from the accompanying drawings and the following detailed description of the preferred embodiments.

### Brief Description of the Drawings

FIG. 1 is an axial end view of an illustrative embodiment of a stator whose intermediate lead wires have been connected to the terminal means located on the stator terminal board in accordance with the principles of this invention.

FIG. 2 is a partial axial end view of an alternative positioning of the intermediate lead wire terminal means on the stator terminal board.

FIGS. 3, 4, 5, and 6 illustrate by fragmentary axial views of the stator end the sequence of steps of connecting the intermediate lead wire to the terminal means. FIG. 5 includes elements viewed along the line 5-5 in FIG. 7.

FIG. 7 is a fragmentary sectional view of the wire insertion device taken along the line 7-7 in Fig. 5.

FIGS. 8 and 9 are views similar to that in FIG. 7, showing successive stages in the operation of the wire insertion device.

FIG. 10 is an elevational view, partly in section, of the wire hook mechanism of the present invention.

FIGS. 11 and 12 are sectional views illustrating internal details of the wire hook mechanism.

FIG. 13 is an axial end view of the wire hook mechanism.

FIG. 14 is sectional view of the wire hook mechanism taken along the line 14-14 in FIG. 10.

FIG. 15 is a perspective view of a three-axis platform suitable for use with the apparatus of the present invention.

FIG. 16 is an axial end view of the wire insertion device of the present invention, taken along the line 16-16 in FIG. 7.

FIG. 17 is an elevational view, partly in section, of the wire insertion device taken along the line 17-17 in FIG. 16.

FIG. 18 is a view similar to FIG. 3 showing an alternate embodiment of practicing the method of the present invention.

### Detailed Description of the Preferred Embodiments

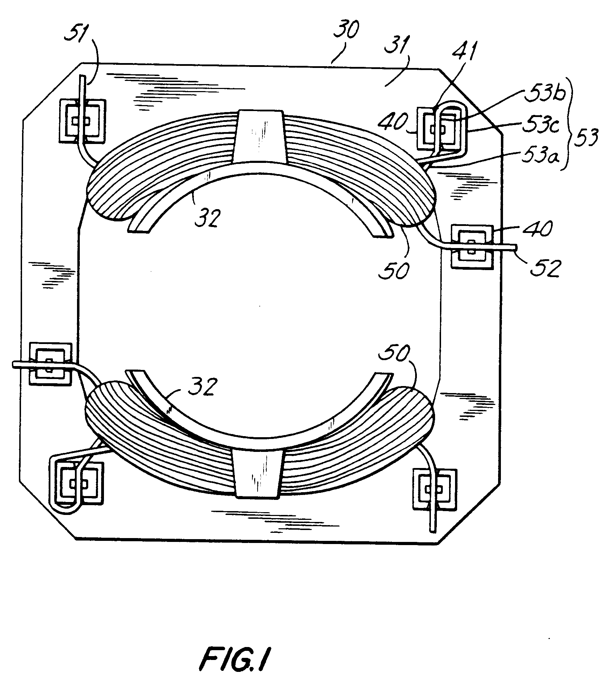

FIG. 1 shows an axial end view of an illustrative embodiment of a stator 30. Coils of wire 50 are wound on each of the upper and lower poles 32 of stator 30. An electrically nonconducting terminal board 31 is affixed to each end of stator core 30, and has terminal means 40 mounted at predetermined positions on terminal board 31. Terminal means 40 is preferably of the AMP style, having a slot 41 which for purposes of illustration is aligned parallel to the vertical edge of stator 30. Each coil 50 has a start lead 51 and an end lead 52. An intermediate lead wire, generally designated 53, and having portions 53a, 53b, and 53c as shown in FIG. 1, has been connected to terminal means 40 in accordance with the principles of this invention such that no cutting of the intermediate lead wire is involved.

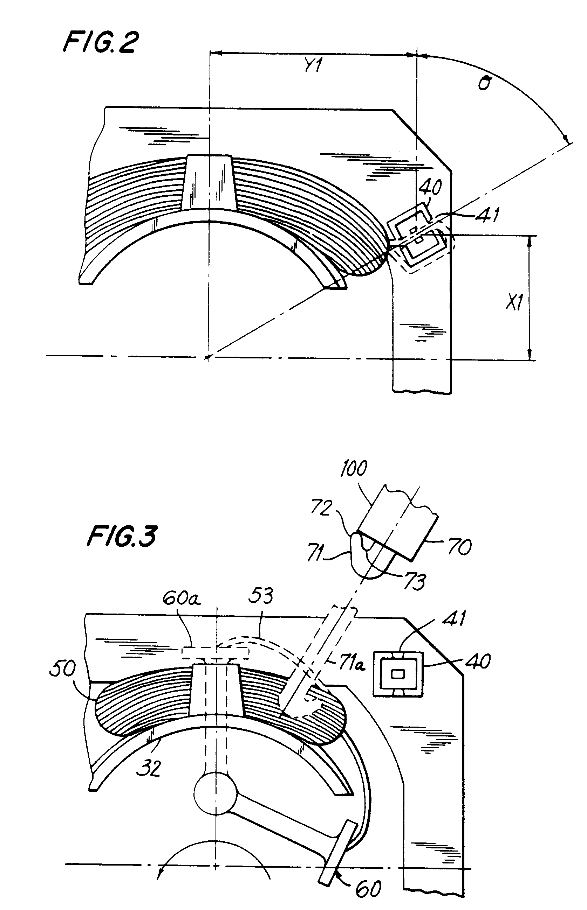

FIG. 2 shows a terminal means 40 having its slot 41 aligned substantially radially with respect to the center of stator core 30. As will be described below, the apparatus of the present invention can be used with the terminal means 40 positioned at any location with respect to the horizontal (Y1) and vertical (X1) axes of the stator and with slot 41 at any angular orientation (ϑ).

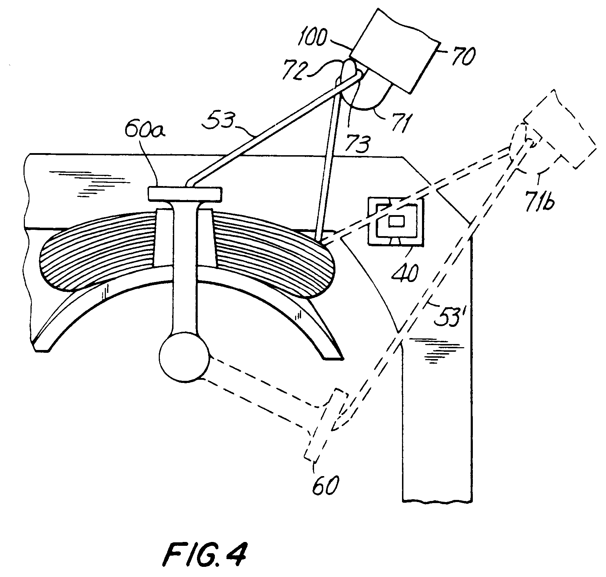

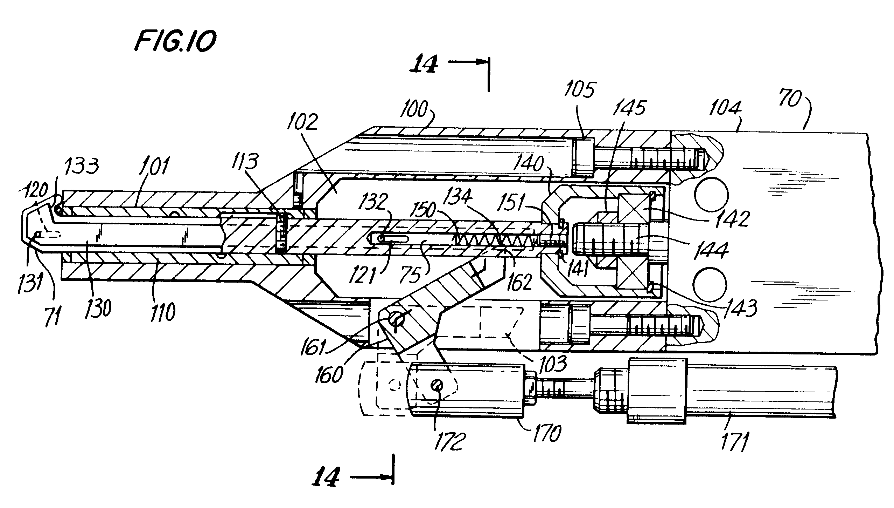

Referring to FIG. 3, a first portion of coil 50 has been wound on stator pole 32 by oscillatory and reciprocatory movement of winding shuttle needle 60. The shuttle needle 60 is stopped adjacent the end of stator core 30 which supports terminal means 40. Hook mechanism, generally designated 70, carries an elongated rod 71 having at one end a hook 72 with a groove 73 (see also FIG. 10). Rod 71 moves translatingly and rotatingly from a first position 71 shown in solid lines to a second position 71a shown in phantom lines. Shuttle needle 60 then rotates counterclockwise to a vertical position 60a shown in phantom lines, so that the strand of wire 53 extending from the first portion of coil 50 to shuttle needle 60 can be engaged by groove 73 of hook 72 at position 71a when hook 72 retracts.

Referring now to the solid lines in FIG. 4, rod 71 has been retracted from its extended position 71a shown in FIG. 3 back to its original position 71, so that the tip of hook 72 abuts against support member 100 of hook mechanism 70. The strand of wire 53 is not gripped by hook 72, but is capable of sliding movement relative to hook 72, so that additional wire 53 may be drawn from shuttle needle 60a. Referring now to the phantom lines in FIG. 4, hook mechanism 70 is translated laterally with respect to stator terminal board 31 to a position 71b, and shuttle needle 60a is rotated clockwise back to its original position 60. These movements uncross wire 53 and move the portion of wire strand 53 between hook 72 and shuttle needle 60 out of the way of the wire insertion device, hereinafter described, to a position 53′ adjacent terminal means 40.

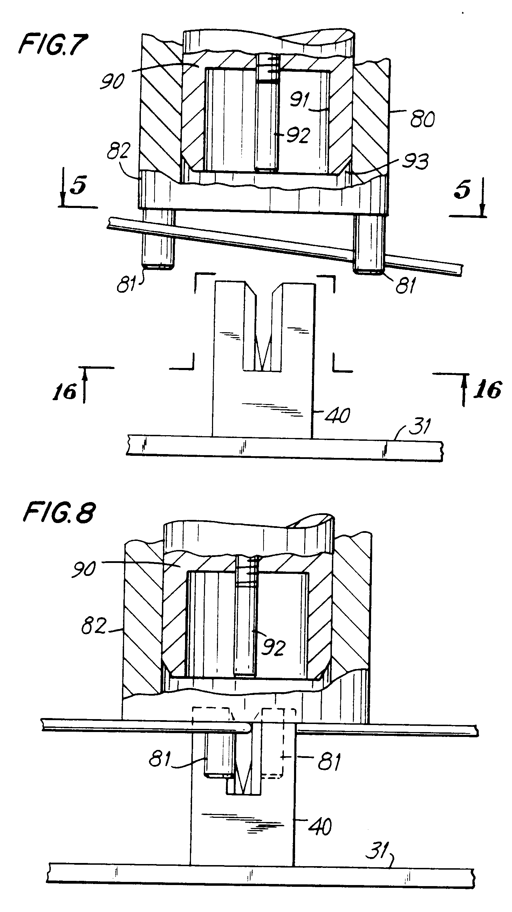

As shown in FIG. 7, wire insertion device 80 is centered on terminal means 40. Insertion device 80 has a pair of wire guide bars 81 carried on the opposite ends of a diameter of a cylindrical sleeve 82. Sleeve 82 is capable of rotating about its axis, as well as translational movement relative to the stator terminal board 31. A shaft 90 is disposed slidingly and concentrically within sleeve 82, and has a hollow sleeve portion 91 at one end with wire insertion tool 92 mounted at the center of sleeve 91, so that the centers of guide bars 81 and insertion tool 92 lie along a diameter of wire insertion device 80. The inner diameter of the sleeve 91 is greater than that of the outer diameter of terminal means 40, while the diameter of wire insertion tool 92 is sized to freely enter the hollow portion of terminal means 40. Sleeve portion 91 of shaft 90 has a bevel 93 on its outer surface.

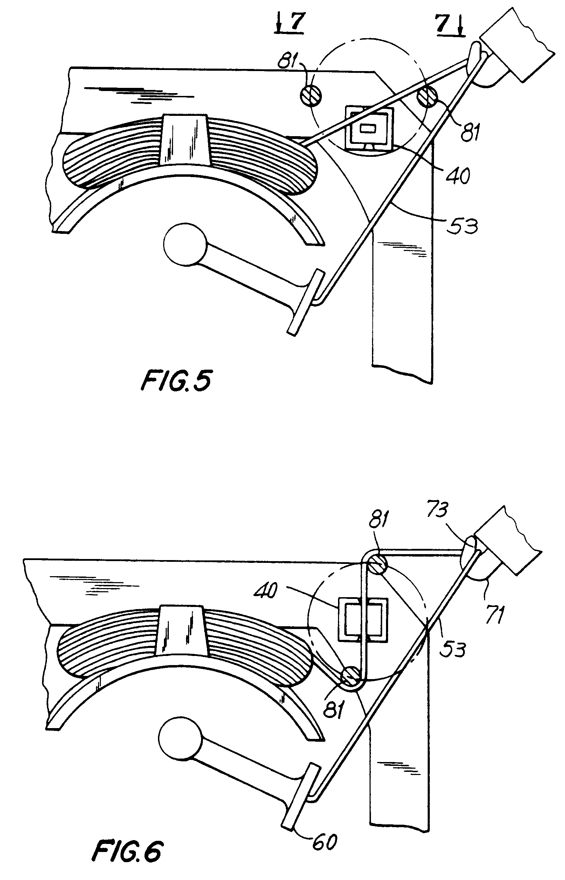

As depicted in FIG. 5 (which includes elements taken along the line 5-5 in FIG. 7), wire insertion device 80 has been moved into proximity with the stator terminal board so that guide bars 81 extend on opposite sides of the strand of wire 53 and before wire insertion device 80 is centered on terminal means 40.

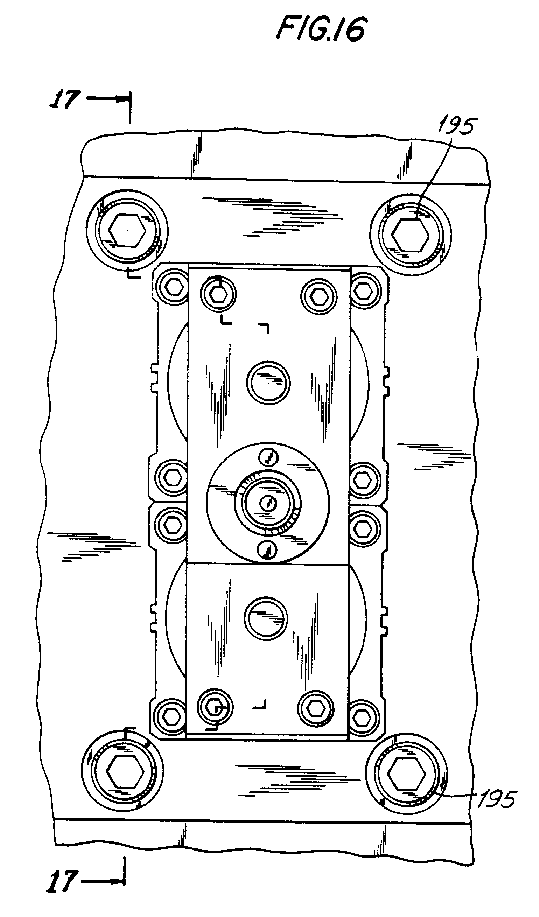

In FIG. 6 wire insertion device 80 has been moved to a position centered on terminal means 40. Centering of wire insertion device 80 on terminal means 40 can be achieved, for example, by a numerically controlled three-axis platform such as that shown in FIG. 15 and generally designated 300. Platform 300 is preprogrammed for a predetermined location and orientation of terminal means 40 on terminal board 31, which programming may be readily modified by conventional methods for variation in the terminal means placement on the terminal board. In a first embodiment of the present invention, the hook mechanism need only be capable of sweeping movement relative to the stator terminal board, in which case wire 53 is engaged by guide bars 81 before wire insertion device 80 is centered on the terminal means. In an alternate embodiment, the hook mechanism 70 may be mounted on the slide 301 of platform 300, so that rod 71 is capable of movement in an arcuate path. In this second embodiment, the wire insertion device, which must be centered on the terminal means, need only be capable of translational movement toward and away from the stator terminal board 31.

Sleeve 82 is rotated through a predetermined arc to bring wire 53 into alignment with the slot 41 of terminal means 40 by action of wire 53 bearing against guide bars 81. During this rotation of sleeve 82, an additional length of wire 53 is drawn from shuttle needle 60, wire 53 freely sliding through the groove 73 of hook 72 and against guide bars 81.

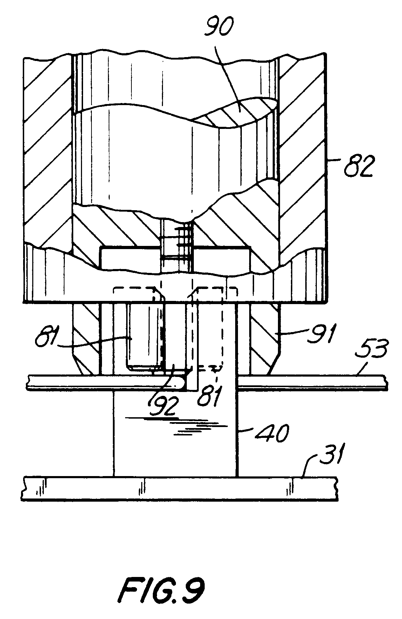

Referring now to FIGS. 8 and 9, wire insertion device 80 is translated toward terminal means 40 so that wire 53 is partially inserted in the opening of the slot 41 of terminal means 40 by the urging of sleeve 82. For clarity in the further description of this invention, the wire may now be referred to as having the three portions described with respect to FIG. 1: a first portion 53a tautly extending from a first portion of coil 50 to terminal means 40; a second portion 53b disposed within terminal means slot 41; and a third portion 53c extending from terminal means 40 to a second portion of coil 50. In FIG. 9 shaft 90 is translated toward terminal means 40 so that the sleeve portion 91 of shaft 90 surrounds the exterior of terminal means 40 while insertion tool 92 extends into the interior of terminal means 40, whereby insertion tool 92 urges wire portion 53b to the base of slot 41.

After the wire has been inserted in the slot 41 of terminal means 40, wire portion 53c is released from hook mechanism 70, described hereinafter. The sleeve 91 of shaft 90 urges wire portion 53b toward the base of the slot 41 of terminal means 40, while the bevel 93 of sleeve 91 prevents wire portion 53c from becoming wrapped inadvertantly around sleeve 91. Wire insertion tool 92 holds wire portion 53b in engagement with slot 41 of terminal means 40 while shuttle 60 is positioned to begin winding the next coil portion of coil 50 on pole 32. Shaft 90 and sleeve 82 are then translated away from terminal means 40 and winding shuttle 60 resumes winding of a second portion of coil 50 on stator pole 32, causing strand 53c to become wrapped tightly against the exterior surface of terminal means 40. This sequence of events results in a completed intermediate lead connection as shown in FIG. 1.

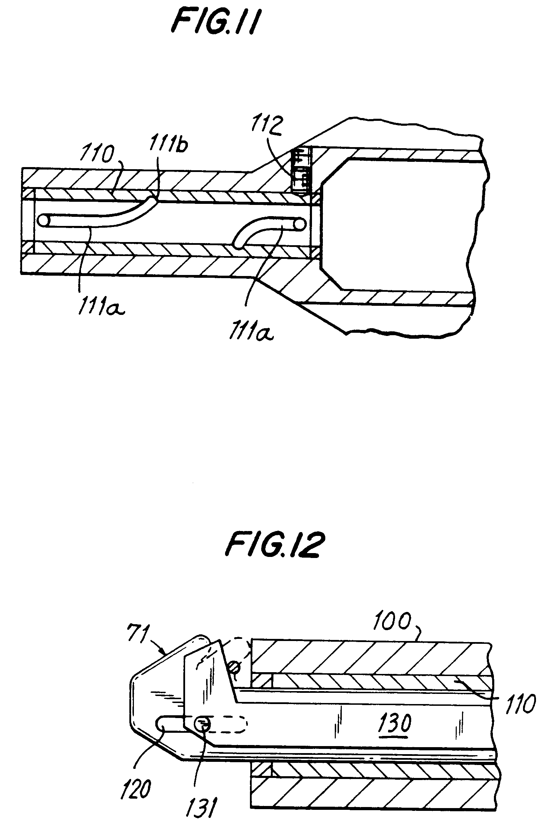

FIGS. 10, 11, and 12 show sectional views and details of hook mechanism 70. Hook mechanism 70 includes a support member 100 having a bore extending therethrough with a first portion 101 and a second portion 102, such that the second portion of the bore has a larger diameter than the first portion. Support member 100 is mounted to air cylinder 104 by fastening means such as bolts 105. Air cylinder 104 is mounted to a platform capable of movement in either one or three directions, such as platform 300 of FIG. 15, depending upon the specific embodiment selected from those described heretofore. A sleeve 110 having a groove 111 on its inner surface comprised of straight portions 111a and helical portions 111b, as shown in FIG. 11, is fixedly mounted in the first portion of bore 101 of support member 100 by fastening means, such as a screw 112. A pin 113 extending through rod 71 slides in groove portions 111a and 111b as rod 71 is translated through sleeve 110, whereby the helical portion 111b of the groove causes rod 71 to rotate about its axis to achieve the desired orientation relative to the stator terminal board, for example position 71a in FIG. 3. The straight portions 111a of the groove are designed so that rod 71 rotates only after wire 53 is captured in the groove 73 of hook 72.

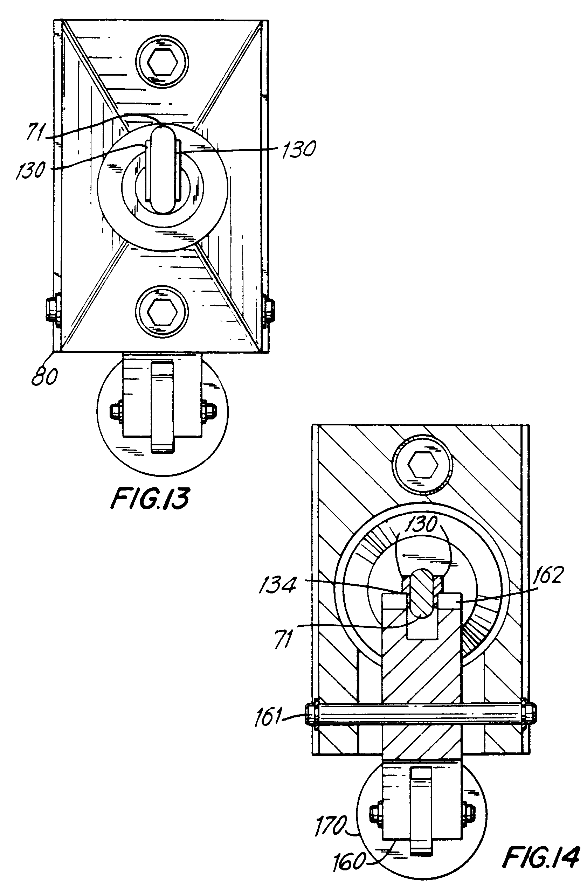

Rod 71 has a pair of slots 120 and 121 through its thickness at two locations as shown in FIG. 10. A pair of plates 130 are positioned on opposite sides of rod 71 as shown in FIG. 13, the plates being joined by pins 131 and 132 extending through the slots 120 and 121 so that the plates are slideably movable relative to rod 71. Plates 130 have a sloped surface 133 near the groove 73 in hook 72 and recesses 134 located near the end opposite hook 72.

Bell-shaped member 140 is affixed to the end of rod 71 opposite the hook end 72, member 140 being fixedly secured to the end of rod 71 with a retainer ring 141. An outer race of bearing 142 is fixedly secured to member 140 by a retainer ring 143. The inner race of bearing 142 is fixedly secured to the piston rod 144 of air cylinder 104 by a suitable fastener, for example, a nut 145. This arrangement permits the translational movement of piston rod 144 of air cylinder 104 to be converted into translational and rotational movement of rod 71 as it slides along groove 111 of sleeve 110.

Rod 71 has a bore 75 extending inward from the end affixed to member 140 to a depth at least as deep as the end of slot 121. A compression spring 150 is disposed within the bore 75 of rod 71, with one end of the spring fixed to a screw 151 mounted in bore 75 and the other end urging pin 132 against the end of the slot 121 nearest the hook end 72. Spring 150 therefore biases plates 130 to a position clear of wire engaging hook 72.

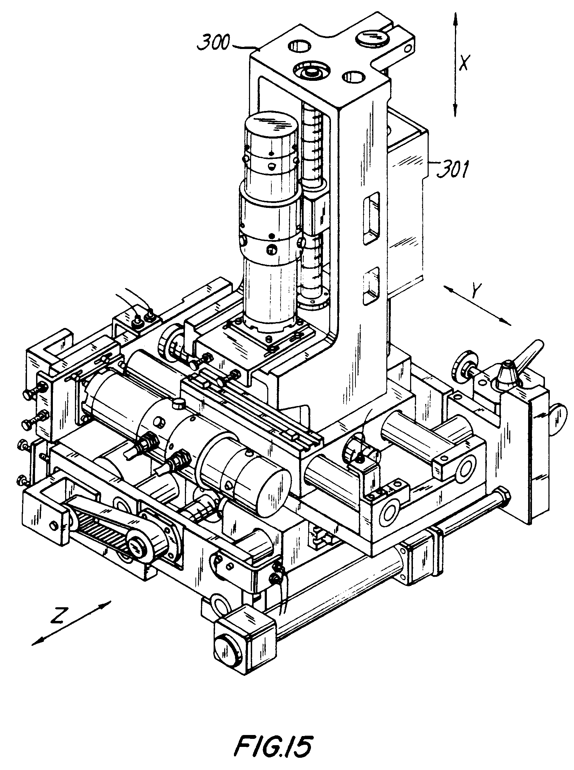

Referring to FIGS. 10 and 14, a forked bell crank 160 is pivotally mounted in an opening 103 of support member 100 by pin 161. A first end of forked bell crank 160 is pivotally secured to a piston arm 170 of an air cylinder 171 by a pin 172. A second end of the forked bell crank extends into the second portion of the bore 102 in support member 100 through opening 103. The tips 162 of the second end of the forked bell crank engage recesses 134 in plates 130. The tips 162 of the second end of the forked member 160 are shown in FIG. 14 engaged in the recesses 134 of plates 130.

Referring again to FIG. 10, when the wire 53 is engaged in the groove 73 of hook 72 during the wire insertion phase, air cylinder 104 keeps piston rod 144 retracted, so that the tip of hook 72 bears against support member 100 of hook mechanism 70. Spring 150 keeps plates 130 clear of the groove 73 of hook 72 during the movement of rod 71 to capture wire 53. During the wire-engaging operation of the hook mechanism, forked bell crank 160 remains in the position shown in phantom lines in FIG 10. Once the wire is inserted in terminal means 40, hook 72 must release wire portion 53c. First, piston arm 170 is retracted in cylinder 171 so that forked bell crank 160 rotates until its tips 162 are disposed within the recesses 134 of plates 130. Piston rod 144 of cylinder 104 is then slowly extended, thereby extending rod 71 and plates 130 in unison. However, after a short distance of travel the tips 162 of forked member 160 engage the ends of recesses 134 and prevent further extension of plates 130, while rod 71 continues to extend until pins 131 and 132 abut against the ends of slots 120 and 121. The relative notion between plates 130 and rod 71 results in the configuration shown in FIG. 12, such that wire 53 slides off the sloped surface 133 of plates 130 when winding shuttle 60 resumes winding the second portion of coil 50.

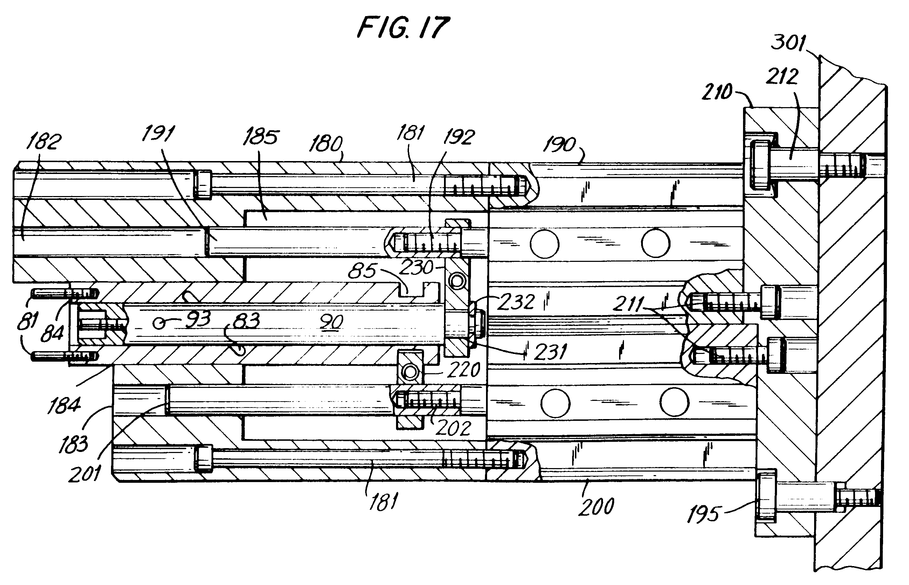

Referring to FIGS. 16 and 17, the structure of wire insertion device 80 is shown, wherein sleeve 82 and shaft 90 are carried in support member 180 to perform the functions heretofore described. Support member 180 is mounted to a pair of cylinders 190 and 200 by bolts 181. Cylinders 190 and 200 are in turn mounted on support plate 210 by bolts 211. Depending upon the specific embodiment of the wire insertion device selected from those heretofore discussed, support plate 210 may be mounted on a slide 301 by bolts 212 which slide may be movable along three axes, as in FIG. 15, or simply capable of translation from a first position near the stator terminal board to a second position away from the stator terminal board.

Support member 180 has three bores 182, 183, and 184 leading from its front face to a void 185. Rod extensions 191 and 201 mounted on the piston rods 192 and 202 of air cylinders 190 and 200, respectively, are slideably supported in the bores 182, 183 in support member 180. Sleeve 82 carrying guide bars 81 and shaft 90 is supported in bore 184 for sliding and rotating movement about its axis. Sleeve 82 has a groove 83 comprising straight and helical portions located on its inner bore 84. A pin 93 fixed on shaft 90 is slideably engaged in groove 83. Sleeve 82 also has a circumferential notch 85 near the end of sleeve 82 opposite the end on which the guide bars 81 are mounted. Arm 220 mounted on the rod extension 201 of piston arm 202 has a projection disposed in the notch 85 of sleeve 82 so that translational movement of piston arm 202 imparts translational and rotational movement to sleeve 82 as groove 83 slides along pin 93. A first straight portion of groove 83 provides translational movement of sleeve 82 towards stator terminal board 31; the helical portion of groove 83 rotates sleeve 82 and guide bars 81 to align the wire 53 with the slot 41 in terminal means 40. Thus, by changing the helical pitch of the groove 83 in sleeve 82, the wire 53 can be aligned for any predetermined orientation of the slot 41 of terminal means 40.

Arm 230 connects shaft 90 at the end opposite wire insertion tool 92 to the rod extension 191 of piston arm 192. Shaft 90 is mounted in a collar 231 of arm 230 by a nut 232, so that shaft 90 is capable only of translational movement. Sleeve 82 may be employed solely to align wire 53 with the slot 41 of terminal means 40, or may additionally act to partially insert the wire 53 into the slot 41 of terminal means 40. Shaft 90 is extended by the action of piston arm 192 through arm 230 to complete the insertion of the wire 53 into slot 41. Shaft 90 and sleeve 82 remain in position while hook mechanism 70 releases wire portion 53c and shuttle 60 is positioned to begin winding the next portion of coil 50 on stator pole 32. At this point, wire 53 is loosely wrapped around terminal means 40, but positioned so that it will not disengage from terminal means 40 when shaft 90 and sleeve 82 are retracted. Shaft 90 and sleeve 82 are retracted only when shuttle 60 resumes winding the next portion of coil 50, resulting in wire portion 53c being drawn tautly against the exterior of terminal means 40.

In the embodiment of wire insertion device 80 wherein the wire insertion device is centered on terminal means 40, hook mechanism 70 captures wire 53 and positions it so that when sleeve 82 of wire insertion device 80 is translated toward wire 53, guide bars 81 will pass on opposite sides of wire 53 (similar to Figure 5, but centered and at some distance away from terminal means 40). In this case, piston 200 is actuated to advance sleeve 82, whereby pin 93 will cause sleeve 82 to first translate, rotate, and then translate as groove 83 travels along pin 93. At the conclusion of this movement, the guide bars 81 of sleeve 82 have not yet engaged wire 53, but are simply positioned on opposite sides of wire 53. Piston 192 is then actuated to translate shaft 90 forward. Because of the engagement of pin 93 in groove 83, the outwards translation of shaft 90 will cause sleeve 82 to rotate once again, thereby aligning wire 53 with slots 41 of terminal means 40. As shaft 90 completes its forward translation, insertion tool 92 contacts wire 53, inserts it into slot 41 and then urges wire 53 toward the base of slot 41 of terminal means 40. In this embodiment, sleeve 82 serves only to align wire 53 and does not assist in inserting wire 53 into slot 41.

In the embodiment of the wire insertion device wherein the wire insertion device is not centered on the terminal means, for example, as is shown in FIG. 5, it is necessary to have the base of cylinder 200 mounted on an additional cylinder in order to impart further translational movement to wire insertion device 80 to insert the wire 53 into the slot 41 of terminal means 40. This further translation must be performed after the wire insertion device has been aligned with terminal means 40, otherwise guide bars 81 might abut against terminal means 40 during the step of centering the wire insertion device on the slot 41. In this instance, the guide bars 81 of sleeve 82 engage and rotate wire 53 to the correct orientation while at some distance away from and while not yet centered on the terminal means. Wire insertion device 80 is then centered on the terminal means. This is followed by translation of wire device 80 towards stator terminal board 31 by actuating the additional cylinder (so that the end face of sleeve 82 is brought adjacent to terminal means 40), thereby preventing wire 53 from slipping off guide bars 81 during the successive insertion stage. Finally, piston 192 is actuated to translate shaft 90, thereby inserting wire 53 into the slot 41 of terminal means 40. In this instance, the stroke of piston 192 is only long enough to cause pin 93 to slide in the first straight portion of groove 83, and thereby avoids rotating sleeve 82 again. An alternative is to accomplish the additional translation toward the terminal means 40 by movement of the platform 300 of FIG. 15 towards the terminal board after guide bars 81 have been rotated to align the wire 53 with slot 41.

An alternate embodiment of the present invention, for use where orientation of the slot 41 in terminal means 40 does not require that sharp changes in the direction of the wire be made, includes a second hook mechanism and a guide placed over the terminal means. The second hook mechanism is located on a platform 300, such as that shown in FIG. 15, so that the hook mechanism is movable along three axes. After the wire strand 53 has been uncrossed, as shown by the phantom lines in FIG. 4, the second hook mechanism captures the wire and aligns it with a guide placed over the terminal means by moving parallel to the stator terminal board. The second hook mechanism then moves inward toward the terminal board so that the wire contacts the guide and is partially inserted in the slot 41 of terminal means 40. Wire insertion device 80 then completes the wire insertion.

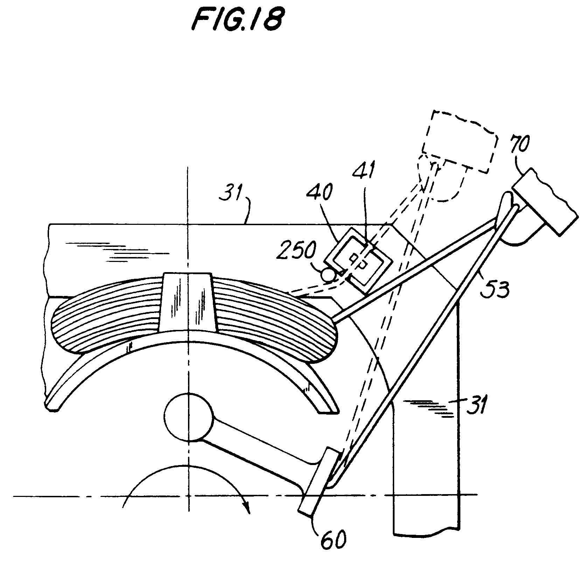

In another alternate embodiment, shown in FIG. 18, a guide rod 250 is positioned near the slot 41 in terminal 40. After the hook mechanism has captured the strand of wire 53, the hook mechanism moves parallel to the stator terminal board so that the wire contacts guide rod 250. Further movement of the hook mechanism parallel to the stator terminal board aligns the wire 53 with the slot 41 in terminal means 40. The hook mechanism then moves inward toward the stator terminal board, causing the wire 53 to become partially inserted in slot 41. Wire insertion is completed by wire insertion device 80. For the purposes of this embodiment, guide bar 250 can be an integrally molded portion of terminal means 40.

## Claims

1. An apparatus for automatically winding a coil having two successively wound portions onto a stator core (30) and for securing an uninterrupted intermediate lead wire extending between said coil portions to terminal means associated with the stator core said terminal means (40) having a portion (41) being a slot for securing said lead wire, the apparatus being characterised in that it further comprises:
- a moving shuttle (60) delivering wire (53) for winding first and second coil portions (50) onto said stator core (30); and
- hooking means (70) for capturing and withdrawing wire (53) being delivered by said shuttle (60) to extend a wire strand (53) going from said first coil (50) to said shuttle (60) proximate to said terminal means (40); and
- means (81, 82) for aligning a portion of said wire strand (53) withdrawn by said hooking means (70) with said terminal portion (41); and
- means (80) for inserting and means (41) for retaining said wire portion (53) in engagement with said terminal portion (41) when said shuttle (60) moves to wind said second coil.

2. The apparatus of claim 1 further comprising means (130) for ejecting said wire (53) from said hooking means (70) when said wire portion is retained in said terminal portion (41).

3. The apparatus of claim 1 or 2 wherein said means (80, 81) for aligning said wire portion comprises:
- means (81) for contacting at least one point of said wire portion, and
- means (82) for rotating said wire portion (53) around said point of contact to align said wire with said terminal portion (41).

4. The apparatus of claim 3 wherein said means for contacting (81) have two points for contacting said wire portions on opposite sides of the outer diameter of the terminal means (40).

5. The apparatus of claim 4 being further characterized in that said two points for contacting (81) said wire portion comprise a pair of guide bars.

6. The apparatus of claim 1 further comprising means (110, 111) for rotating said hooking means (70) when said wire has been captured.

7. The apparatus of claims 2 or 6 wherein the hooking means (70) and the means (110, 111) for rotating said hooking means (70) comprise:
a) a support member (100) having a bore (101, 102), said support member being capable of movement from a first position away from said terminal means (40) to a second position adjacent said terminal means;
b) a sleeve (110) having an inner surface defining a groove (111) comprising straight portions (111a) and helical portions (111b), said sleeve being fixedly mounted in said bore (101) of said support member;
c) an elongated rod (71) having a pin (113) therethrough, said pin being slidably engaged in said groove (111) of said sleeve (110) to impart rotation to said rod about its axis when said rod is translated in said sleeve; and
d) means (140) for moving said rod (71) from a first position away from said wire portion to a second position wherein said wire portion is captured by said hooking means (70).

8. The apparatus of claim 5 being further characterized in that said means (80) for inserting said wire portion in engagement with said terminal portion (41) comprises:
a) a support member (180) being capable of movement from a first position away from said terminal means (40) to a second position centered on said terminal means;
b) a sleeve (82) having said pair of guide bars (81) mounted on one end and an inner surface defining a groove (83) comprising straight portions and helical portions, said sleeve being slideably mounted in a bore (184) of said support member (180);
c) a shaft (90) having a pin (93) affixed threrethrough, said pin being slideably engaged in said groove of said sleeve to impart rotation to said sleeve (82) about its axis when said sleeve is translated in said bore (184) of said support member (180);
d) means (200) for moving said sleeve (82) from a position away from said terminal means to a second position adjacent to said terminal means so that said guide bars (81) engage and align said wire portion with said terminal portion (41) when said groove (83) in said second sleeve slides along said pin (93) affixed to said shaft.

9. The apparatus of claim 5 wherein said means for inserting (80) is positioned between said pair of guide bars.

10. The apparatus of claim 8 further comprising:
- a wire insertion tool (92) mounted on one end of said shaft (90) for inserting said wire portion in engagement with said terminal portion (41); and
- means (192) for moving said shaft (90) from a first position away from said terminal means (40) to a second position wherein said insertion tool (92) urges said wire portion into engagement with said terminal portion (41).

11. The apparatus according to any of the previous claims further comprising means (91, 93) for guiding the wire portion (53) extending from said terminal portion (41) to said shuttle (60) to wrap it around said terminal means.

12. A method for automatically winding a coil having two successively wound portions onto a stator core and for securing an uninterrupted intermediate lead wire extending between said coil portions to terminal means associated with the stator core said terminal means (40) having a portion (41) being a slot for securing said lead wire, said method comprising the steps of:
- winding first and second portions (50) onto said stator core (30) by means of moving shuttle (60) delivering wire;
- securing said intermediate lead wire to said terminal portion (41) between winding of said first and second coil portions, the winding method being characterised in that it further comprises the steps of:
- stopping said shuttle (60) in a predetermined position adjacent said terminal means (40) between winding of said first and second coils, and
- capturing and withdrawing further wire being delivered by said shuttle to extend a wire strand going from said coil to said shuttle (60) proximate to said terminal means (40), and
- aligning a portion of said wire strand which has been withdrawn with said terminal portion (41); and
- inserting and retaining said portion of said wire in engagement with said terminal portion (41) when said shuttle (60) is moved again to wind said second coil.

13. The method of claim 12 further comprising the step of yielding said captured wire when said wire portion is retained in said terminal portion (41).

14. The method according to claims 12 or 13 wherein said aligning step further comprises the steps of:
- contacting at least one point of said wire portion, and
- rotating said wire portion around said point of contact to align said wire with said terminal portion (41).

15. The method according to claim 14 further comprising the step of contacting said wire portion in two points on opposite sides of the outer diameter of the terminal means (40).

16. The method according to any of the preceding claims further comprising the steps of:
- guiding said wire portion extending from said terminal means to said shuttle (66) to wrap it around said terminal means (40).

17. The method according to claim 16 wherein during said guiding step the wire shuttle (60) moves to wind said second coil portion (50).

## Patentansprüche

1. Vorrichtung zum automatischen Wickeln einer Spule, die zwei nacheinander gewickelte Abschnitte auf einen Statorkern (30) aufweist, und zum Befestigen eines durchgehenden Zwischenabgriffsdrahtes, der sich zwischen den Spulenabschnitten bis zum Anschlußmittel erstreckt, das mit dem Statorkern verbunden ist, wobei das Anschlußmittel (40) einen Abschnitt (41) aufweist, der als Schlitz ausgebildet ist, um die Leitung zu befestigen; die Vorrichtung ist dadurch gekennzeichnet, daß sie weiterhin umfaßt:
- ein bewegliches Schiffchen (60), das einen Draht (53) liefert, um erste und zweite Spulenabschnitte (50) auf dem Statorkern (30) zu wickeln; und
- ein Fangmittel (70) zum Einfangen und Zurückziehen des Drahtes (53), der von dem Schiffchen (60) geliefert wurde, um eine Litze (53) auszuspannen, die von der ersten Spule (50) bis zum Schiffchen (60) reicht, die sich unmittelbar an dem Anschlußmittel (40) anschließt; und
- Mittel (81, 82) zum Anschließen eines Abschnittes der Drahtlitze (53), die durch die Fangmittel (70) zurückgezogen wurde, an den Anschlußabschnitt (41); und
- Mittel (80) zum Einführen und Mittel (41) zum Zurückhalten des Drahtabschnittes (53), der sich in Eingriff mit dem Anschlußabschnitt (41) befindet, sobald sich das Schiffchen (60) zum Wickeln der zweiten Spule bewegt.

2. Vorrichtung nach Anspruch 1, weiterhin ein Mittel (130) umfassend, um den Draht (53) aus dem Fangmittel (70) auszuwerfen, wenn der Drahtabschnitt in dem Anschlußabschnitt (41) zurückgehalten wird.

3. Vorrichtung nach Anspruch 1 oder 2, bei der die Mittel (80, 81) zum Anschließen des Drahtabschnittes folgendes umfassen:
- Mittel (81) zum Berühren von mindestens einer Stelle des Drahtabschnittes, und
- Mittel (82) zum Drehen des Drahtabschnittes (53) um die Berührungsstelle herum, um den Draht an dem Anschlußabschnitt (41) anzuschließen.

4. Vorrichtung nach Anspruch 3, bei der die Berührungsmittel (81) zwei Stellen aufweisen, um die Drahtabschnitte an gegenüberliegenden Seiten des äußeren Durchmessers des Anschlußmittels (40) zu berühren.

5. Vorrichtung nach Anspruch 4, weiterhin dadurch gekennzeichnet, daß die zwei Stellen (81) zum Berühren des Drahtabschnittes ein Paar Führungsstangen umfassen.

6. Vorrichtung nach Anspruch 1, weiterhin Mittel (110, 111) umfassend, um das Fangmittel (70) zu drehen, wenn der Draht eingefangen worden ist.

7. Vorrichtung nach Anspruch 2 oder 6, bei der das Fangmittel (70) und die Mittel (110, 111) zum Drehen des Fangmittels (70) umfassen:
a) ein Stützbauteil (100), das eine Bohrung (101, 102) aufweist, wobei das Stützbauteil in der Lage ist, sich von einer ersten Position weg von dem Anschlußmittel (40) in eine an das Anschlußmittel angrenzende zweite Position zu bewegen;
b) eine Hülse (110), die eine innere Fläche aufweist, die eine Nut (111) definiert, die gerade Abschnitte (111a) und gewendelte Abschnitte (111b) umfaßt, wobei die Hülse feststehend in der Bohrung (101) des Stützbauteiles befestigt ist;
c) einen Längsstab (71), der einen diesen durchsetzenden Stift (113) aufweist, wobei sich der Stift verschiebbar in der Nut (111) der Hülse (110) im Eingriff befindet, um dem Stab eine Drehbewegung um seine Achse zu erteilen, wenn der Stab in der Hülse verschoben wird; und
d) Mittel (140), um den Stab (71) von einer ersten Position weg von dem Drahtabschnitt in eine zweite Position zu bewegen, bei der der Drahtabschnitt durch das Fangmittel (70) eingefangen wird.

8. Vorrichtung nach Anspruch 5, weiterhin dadurch gekennzeichnet, daß das Mittel (80) zum Einführen des Drahtabschnittes in Eingriff mit dem Anschlußabschnitt (41) folgendes umfaßt:
a) ein Stützbauteil (180), das in der Lage ist, sich von einer ersten Position weg von dem Anschlußmittel (40) zu einer zweiten Position zu bewegen, die auf dem Anschlußmittel zentriert ist;
b) eine Hülse (82), die ein Paar Führungsstangen (81) aufweist, die an einem Ende befestigt sind und die eine innere Oberfläche aufweist, die eine Nut (83) definiert, die gerade Abschnitte und gewendelte Abschnitte umfaßt, wobei die Hülse verschiebbar in einer Bohrung (184) des Stützbauteiles (180) befestigt ist;
c) ein Schaft (90), der einen Stift (93) aufweist, der durch diesen befestigt ist, wobei sich der Stift verschiebbar in der Nut der Hülse im Eingriff befindet, um der Hülse (82) eine Drehbewegung um seine Achse herum zu erteilen, wenn die Hülse in der Bohrung (184) des Stützbauteiles (180) verschoben wird;
d) Mittel (200), um die Hülse (82) von einer Position weg von dem Anschlußmittel in eine zweite Position zu bewegen, die an das Anschlußmittel angrenzt, so daß die Führungsstangen (81) in Eingriff kommen und den Drahtabschnitt an den Anschlußabschnitt (41) anschließen, wenn die Nut (83) in der zweiten Hülse entlang des Stiftes (93) gleitet, der an dem Schaft befestigt ist.

9. Vorrichtung nach Anspruch 5, bei der das Mittel (80) zum Einführen zwischen dem Paar Führungsstangen positioniert ist.

10. Vorrichtung nach Anspruch 8 weiterhin umfassend:
- ein Drahteinführwerkzeug (92), das an einem Ende des Schaftes (90) befestigt ist, um den Drahtabschnitt in Eingriff mit dem Anschlußabschnitt (41) zu bringen; und
- Mittel (192), um den Schaft (90) von einer ersten Position weg von dem Anschlußmittel (40) in eine zweite Position zu bewegen, in der das Einführwerkzeug (92) den Drahtabschnitt in Eingriff mit dem Anschlußabschnitt (41) zwingt.

11. Vorrichtung nach einem der vorhergehenden Ansprüche, weiterhin Mittel (91, 93) zum Führen des Drahtabschnittes (53) umfassend, die sich von dem Anschlußabschnitt (41) bis zum Schiffchen (60) erstrecken, um ihn um das Anschlußmittel zu wickeln.

12. Verfahren zum automatischen Wickeln einer Spule, die zwei nacheinander gewickelte Abschnitte auf einem Statorkern aufweist und zum Befestigen eines durchgehenden Zwischenabgriffsdrahtes, der sich zwischen den Spulenabschnitten bis zum Anschlußmittel erstreckt, das mit dem Statorkern verbunden ist, wobei das Anschlußmittel (40) einen Abschnitt (41) aufweist, der als Schlitz ausgebildet ist, um die Leitung zu befestigen; das Verfahren umfaßt die folgenden Verfahrensschritte:
- Wickeln erster und zweiter Abschnitte (50) auf dem Statorkern (30) mittels eines beweglichen Schiffchens (60), das den Draht liefert;
- Befestigen des Zwischenabgriffsdrahtes an dem Anschlußabschnitt (41) zwischen dem Wickeln der ersten und zweiten Spulenabschnitte, das Wickelverfahren ist dadurch gekennzeichnet, daß es weiterhin die folgenden Verfahrensschritte umfaßt:
- Anhalten des Schiffchens (60) in einer vorbestimmten Position, die an dem Anschlußmittel (40) angrenzt, zwischen dem Wickeln der ersten und zweiten Spule, und
- Einfangen und Zurückziehen von zusätzlichem Draht, der durch das Schiffchen geliefert wird, um eine Litze auszuspannen, die von der ersten Spule bis zum Schiffchen (60) reicht, der sich unmittelbar an dem Anschlußmittel (40) anschließt; und
- Anschließen eines Abschnittes der Litze, die mit den Anschlußabschnitt (41) zurückgezogen wurde; und
- Einführen und Zurückhalten des Drahtabschnittes, der sich in Eingriff mit dem Anschlußabschnitt (41) befindet, sobald das Schiffchen (60) erneut zum Wickeln der zweiten Spule bewegt wird.

13. Verfahren nach Anspruch 12, weiterhin den Verfahrensschritt des Auswerfens des eingefangenen Drahtes umfassend, wenn der Drahtabschnitt in dem Anschlußabschnitt (41) zurückgehalten wird.

14. Verfahren nach den Ansprüchen 12 oder 13, bei denen der Verfahrensschritt des Anschließens weiterhin die folgenden Verfahrensschritte umfaßt:
- Berühren an mindestens einer Stelle des Drahtabschnittes, und
- Drehen des Drahtabschnittes um den Berührungspunkt, um den Draht an den Anschlußabschnitt (41) anzuschließen.

15. Verfahren nach Anspruch 14, weiterhin den Verfahrensschritt des Berührens des Drahtabschnittes an zwei Stellen an gegenüberliegenden Seiten des äußeren Durchmessers des Anschlußmittels (40) umfassend.

16. Verfahren nach einem der vorhergehenden Ansprüche, weiterhin die folgenden Verfahrensschritte umfassend:
- Führen des Drahtabschnittes der sich von dem Anschlußabschnitt bis zum Schiffchen (60) erstreckt, um ihn um das Anschlußmittel (40) zu wickeln.

17. Verfahren nach Anspruch 16, bei dem sich während des Verfahrensschrittes des Führens das Drahtschiffchen (60) bewegt, um den zweiten Spulenabschnitt (50) zu wickeln.

## Revendications

1. Appareil pour enrouler automatiquement un bobinage présentant deux portions enroulées successivement sur un noyau de stator (30) et pour fixer un fil de plomb intermédiaire ininterrompu s'étendant entre lesdites portions de bobinage vers des moyens formant pôle associés au noyau de stator, lesdits moyens formant pôle (40) ayant une portion (41) définissant une fente pour fixer ledit fil de plomb, l'appareil étant caractérisé en ce qu'il comprend en outre :
- une navette mobile (60) fournissant du fil (53) pour enrouler les première et deuxième portions de bobinage (50) sur le noyau de stator (30) ; et
- des moyens d'accrochage (70) pour capturer et retirer le fil (53) fourni par ladite navette (60) pour étendre une longueur de fil (53) allant du premier bobinage (50) jusqu'à ladite navette (60) au voisinage desdits moyens formant pôle (40) ; et
- des moyens (81, 82) pour aligner une portion de ladite longueur de fil (53) retirée par lesdits moyens d'accrochage (70) avec ladite portion de pôle (41) ; et
- des moyens (80) pour insérer et des moyens (41) pour retenir ladite portion de fil (53) engagée avec ladite portion de pôle (41) lorsque ladite navette (60) se déplace pour enrouler le second bobinage.

2. Appareil selon la revendication 1, comprenant en outre des moyens (130) pour éjecter ledit fil (53) des moyens d'accrochage (70) lorsque ladite portion de fil est retenue dans la portion de pôle (41).

3. Appareil selon la revendication 1 ou 2, dans lequel les moyens (81, 82) pour aligner ladite portion de fil comprennent :
- des moyens (81) pour rentrer en contact avec au moins un point de ladite portion de fil ; et
- des moyens (82) pour mettre en rotation ladite portion de fil (53) autour dudit point de contact pour aligner ledit fil avec ladite portion de pôle (41).

4. Appareil selon la revendication 3, dans lequel lesdits moyens pour rentrer en contact (81) présentent deux points pour rentrer en contact avec lesdites portions de fil sur des côtés opposés du diamètre externe desdits moyens formant pôle (40).

5. Appareil selon la revendication 4, caractérisé en outre en ce que les deux points pour rentrer en contact (81) avec ladite portion de fil comprennent une paire de barres de guidage.

6. Appareil selon la revendication 1, comprenant en outre des moyens (110, 111) pour mettre en rotation lesdits moyens d'accrochage (70) lorsque ledit fil a été capturé.

7. Appareil selon la revendication 2 ou 6, caractérisé en ce que les moyens d'accrochage (70) et les moyens (110, 111) pour mettre en rotation lesdits moyens d'accrochage (70) comprennent :
a) un élément de support (100) présentant un alésage (101, 102), ledit élément de support étant déplaçable depuis une première position éloignée desdits moyens formant pôle (40) jusqu'à une deuxième position adjacente auxdits moyens formant pôle ;
b) un manchon (110) présentant une surface interne portant une rainure (111) comprenant des portions droites (111a) et des portions hélicoïdales (111b), ledit manchon étant monté fixement dans l'alésage (101) de l'élément de support ;
c) une tringle allongée (71) présentant une broche (113) la traversant, ladite broche étant engagée en glissement dans la rainure (111) dudit manchon (110) pour entraîner en rotation la tringle autour de son axe lorsque ladite tringle est déplacée en translation dans ledit manchon ; et
d) des moyens (140) pour déplacer ladite tringle (71) depuis une première position éloignée de ladite portion de fil jusqu'à une deuxième position dans laquelle ladite portion de fil est capturée par lesdits moyens d'accrochage (70).

8. Appareil selon la revendication 5, caractérisé en outre en ce que les moyens (80) pour insérer ladite portion de fil en engagement avec ladite portion de pôle (41) comprennent :
a) un élément de support (180) déplaçable depuis une première position éloignée desdits moyens formant pôle (40) jusqu'à une deuxième position centrée sur lesdits moyens formant pôle;
b) un manchon (82) présentant ladite paire de barres de guidage (81) montée à une extrémité, et une surface interne portant une rainure (83) comprenant des portions droites et des portions hélicoïdales, ledit manchon étant monté en glissement dans un alésage (184) dudit élément de support (180);
c) un arbre (90) présentant une broche (93) fixée à travers celui-ci, ladite broche étant engagée en glissement dans la rainure du manchon pour provoquer la rotation dudit manchon (82) autour de son axe lorsque ledit manchon est déplacé en translation dans ledit alésage (184) dudit élément de support (180);
d) des moyens (200) pour déplacer ledit manchon (82) depuis une position éloignée desdits moyens formant pôle jusqu'à une deuxième position adjacente auxdits moyens formant pôle, de sorte que lesdites barres de guidage (81) viennent en engagement avec ladite portion de fil et l'alignent avec ladite portion de pôle (41) lorsque la rainure (83) prévue dans ledit deuxième manchon coulisse suivant la broche (93) fixée audit arbre.

9. Appareil selon la revendication 5, dans lequel lesdits moyens d'insertion (80) sont disposés entre la paire de barres de guidage.

10. Appareil selon la revendication 8, comprenant en outre :
- un outil d'insertion de fil (92) monté à une extrémité dudit arbre (90) pour insérer ladite portion de fil en engagement avec ladite portion de pôle (41) ; et
- des moyens (192) pour déplacer ledit arbre (90) depuis une première position éloignée desdits moyens formant pôle (40) jusqu'à une deuxième position dans laquelle ledit outil d'insertion (92) pousse ladite portion de fil en engagement avec ladite portion de pôle (41).

11. Appareil selon l'une quelconque des revendications précédentes, comprenant en outre des moyens (91, 93) pour guider la portion de fil (53) s'étendant depuis ladite portion de pôle (41) jusqu'à ladite navette (60) pour l'enrouler autour desdits moyens formant pôle.

12. Procédé pour enrouler automatiquement un bobinage présentant deux portions enroulées successivement sur un noyau de stator et pour fixer un fil de plomb intermédiaire ininterrompu s'étendant entre lesdites portions de bobinage vers des moyens formant pôle associés au noyau de stator, lesdits moyens formant pôle (40) ayant une portion (41) définissant une fente pour la fixation dudit fil de plomb, ledit procédé comprenant les étapes consistant à :
- enrouler des première et deuxième portions de bobinage (50) sur ledit noyau de stator (30) au moyen d'une navette mobile (60) fournissant du fil ;
- fixer ledit fil de plomb intermédiaire à ladite portion de pôle (41) entre les étapes d'enroulement desdites première et deuxième portions de bobinage, le procédé d'enroulement étant caractérisé en ce qu'il comprend en outre les étapes consistant à :
- arrêter ladite navette (60) dans une position prédéterminée adjacente auxdits moyens formant pôle (40) entre les étapes d'enroulement desdites première et deuxième portions de bobinage ; et
- capturer et retirer plus loin le fil fourni par ladite navette pour étendre une longueur de fil allant depuis ledit bobinage jusqu'à ladite navette (60) au voisinage desdits moyens formant pôle (40) ; et
- aligner une portion de ladite longueur de fil qui a été retirée avec ladite portion de pôle (41) ; et
- insérer et retenir ladite portion de fil en engagement avec ladite portion de pôle (41) lorsque ladite navette (60) est déplacée à nouveau pour enrouler ledit deuxième bobinage.

13. Procédé selon la revendication 12, comprenant en outre l'étape consistant à libérer le fil capturé lorsque ladite portion de fil est retenue dans ladite portion de pôle (41).

14. Procédé selon la revendication 12 ou 13, dans lequel l'étape d'alignement comprend en outre les étapes consistant à :
- rentrer en contact avec au moins un point de ladite portion de fil ; et
- mettre en rotation ladite portion de fil autour dudit point de contact pour aligner ledit fil avec ladite portion de pôle (41).

15. Procédé selon la revendication 14, comprenant en outre l'étape consistant à rentrer en contact avec ladite portion de fil en deux points sur des côtés opposés du diamètre externe des moyens formant pôle (40).

16. Procédé selon l'une quelconque des revendications précédentes, comprenant en outre les étapes consistant à :
- guider ladite portion de fil s'étendant depuis lesdits moyens formant pôle jusqu'à ladite navette (60), pour l'enrouler autour desdits moyens formant pôle (40).

17. Procédé selon la revendication 16, dans lequel, durant l'étape de guidage, la navette de fil (60) se déplace pour enrouler ladite deuxième portion de bobinage (50).
